# FASCICULE DE BREVET EUROPEEN

(11) **EP 3 924 124 B1**
(45) Date de publication et mention de la délivrance du brevet: **15.11.2023**
(21) Numéro de dépôt: 20711231.9
(22) Date de dépôt: 13.02.2020
(51) Int. Cl.: B22F 3/105, C22C 21/00, B33Y 80/00, B33Y 70/00, B33Y 10/00, C22C 1/04, B22F 1/06, B22F 10/64, B22F 3/24, B33Y 40/20, C22F 1/04, B22F 3/15, B22F 9/08, B22F 10/25, B22F 10/36, B22F 10/364

(54) **PROCÉDÉ DE FABRICATION D'UNE PIÈCE EN ALLIAGE D'ALUMINIUM**
VERFAHREN ZUR HERSTELLUNG EINES ALUMINIUMLEGIERUNGSTEILS
METHOD FOR MANUFACTURING AN ALUMINUM ALLOY PART

(30) Priorité: 15.02.2019 FR 1901575
(43) Date de publication de la demande: 22.12.2021
(73) Titulaire: C-Tec Constellium Technology Center, 38341 Voreppe (FR)
(72) Inventeur: CHEHAB, Bechir, 38500 VOIRON (FR)
(74) Mandataire: Constellium - Propriété Industrielle
(86) Numéro de dépôt international: PCT/FR2020/050264
(87) Numéro de publication internationale: WO 2020/165542

(56) Documents cités:
- EP-A1- 0 675 209
- EP-A1- 3 406 372
- WO-A1-2018/119283
- WO-A1-2018/206876
- WO-A1-2019/108596
- WO-A1-2019/155180
- US-A1- 2010 143 177
- US-A1- 2017 016 093

## Description

### DOMAINE TECHNIQUE

Le domaine technique de l'invention est un procédé de fabrication d'une pièce en alliage d'aluminium, mettant en oeuvre une technique de fabrication additive.

### ART ANTERIEUR

Depuis les années 80, les techniques de fabrication additive se sont développées. Elles consistent à mettre en forme une pièce par ajout de matière, ce qui est à l'opposé des techniques d'usinage, qui visent à enlever de la matière. Autrefois cantonnée au prototypage, la fabrication additive est à présent opérationnelle pour fabriquer des produits industriels en série, y compris des pièces métalliques.

Le terme « fabrication additive » est défini, selon la norme française XP E67-001, comme un "ensemble des procédés permettant de fabriquer, couche par couche, par ajout de matière, un objet physique à partir d'un objet numérique". La norme ASTM F2792 (janvier 2012) définit également la fabrication additive. Différentes modalités de fabrication additive sont aussi définies et décrites dans la norme ISO/ASTM 17296-1. Le recours à une fabrication additive pour réaliser une pièce en aluminium, avec une faible porosité, a été décrit dans le document WO2015/006447. L'application de couches successives est généralement réalisée par application d'un matériau dit d'apport, puis fusion ou frittage du matériau d'apport à l'aide d'une source d'énergie de type faisceau laser, faisceau d'électrons, torche plasma ou arc électrique. Quelle que soit la modalité de fabrication additive appliquée, l'épaisseur de chaque couche ajoutée est de l'ordre de quelques dizaines ou centaines de microns.

Un moyen de fabrication additive est la fusion ou le frittage d'un matériau d'apport prenant la forme d'une poudre. Il peut s'agir de fusion ou de frittage par un faisceau d'énergie.

On connait notamment les techniques de frittage sélectif par laser (selective laser sintering, SLS ou direct métal laser sintering, DMLS), dans lequel une couche de poudre de métal ou d'alliage métallique est appliquée sur la pièce à fabriquer et est frittée sélectivement selon le modèle numérique avec de l'énergie thermique à partir d'un faisceau laser. Un autre type de procédé de formation de métal comprend la fusion sélective par laser (selective laser melting, SLM) ou la fusion par faisceau d'électrons (electron beam melting, EBM), dans lequel l'énergie thermique fournie par un laser ou un faisceau d'électrons dirigé est utilisée pour fondre sélectivement (au lieu de fritter) la poudre métallique afin qu'elle fusionne à mesure qu'elle refroidit et se solidifie.

On connait également le dépôt par fusion laser (laser melting déposition, LMD) dans lequel la poudre est projetée et fondue par un faisceau laser de façon simultanée.

La demande de brevet WO2016/209652 décrit un procédé pour fabriquer un aluminium à haute résistance mécanique comprenant : la préparation d'une poudre d'aluminium atomisée ayant une ou plusieurs tailles de poudre approximative désirée et une morphologie approximative ; le frittage de la poudre pour former un produit par fabrication additive ; la mise en solution ; la trempe ; et le revenu de l'aluminium fabriqué de façon additive.

La demande de brevet EP2796229 divulgue un procédé de formation d'un alliage métallique d'aluminium renforcé par dispersion comprenant les étapes consistant à : obtenir, sous une forme de poudre, une composition d'alliage d'aluminium qui est susceptible d'acquérir une microstructure renforcée par dispersion ; diriger un faisceau laser à basse densité d'énergie sur une partie de la poudre ayant la composition de l'alliage ; retirer le faisceau laser de la partie de la composition d'alliage en poudre ; et refroidir la partie de la composition d'alliage en poudre à une vitesse supérieure ou égale à environ 10⁶ °C par seconde, pour former ainsi l'alliage métallique d'aluminium renforcé par dispersion. La méthode est particulièrement adaptée pour un alliage ayant une composition selon la formule suivante : Al_{comp}FeₐSi_{b}X_{c}, dans laquelle X représente au moins un élément choisi dans le groupe constitué par Mn, V, Cr, Mo, W, Nb et Ta; « a » va de 2,0 à 7,5 % en atomes ; « b » va de 0,5 à 3,0 % en atomes ; « c » va de 0,05 à 3,5 % en atomes ; et le complément est de l'aluminium et des impuretés accidentelles, à condition que le rapport [Fe+Si]/Si se situe dans la gamme d'environ 2,0:1 à 5,0:1.

La demande de brevet US2017/0211168 divulgue un procédé de fabrication d'un alliage léger et résistant, performant à haute température, comprenant de l'aluminium, du silicium, et du fer et/ou du nickel.

La demande de brevet EP3026135 décrit un alliage de moulage comprenant 87 à 99 parts en poids d'aluminium et de silicium, 0,25 à 0,4 parts en poids de cuivre et 0,15 à 0,35 parts en poids d'une combinaison d'au moins deux éléments parmi Mg, Ni et Ti. Cet alliage de moulage est adapté pour être pulvérisé par un gaz inerte pour former une poudre, la poudre étant utilisée pour former un objet par fabrication additive par laser, l'objet subissant ensuite un traitement de revenu.

La publication « Characterization of AI-Fe-V-Si heat-resistant aluminum alloy components fabricated by sélective laser melting », Journal of Material Research, Vol. 30, No. 10, May 28, 2015, décrit la fabrication par SLM de composants résistants à la chaleur de composition, en % en poids, AI-8.5Fe-1.3V-1.7Si.

La publication « Microstructure and mechanical properties of AI-Fe-V-Si aluminum alloy produced by electron beam melting », Materials Science&Engineering A659(2016)207-214, décrit des pièces du même alliage que dans l'article précédent obtenues par EBM.

La demande de brevet WO 2018/206876 A1 divulgue un procédé de fabrication additive d'une pièce en alliage d'aluminium comportant du Si et du Fe.

Il existe une demande grandissante d'alliages d'aluminium à haute résistance pour l'application SLM. Les alliages 4xxx (principalement Al10SiMg, Al7SiMg et Al12Si) sont les alliages d'aluminium les plus matures pour l'application SLM. Ces alliages offrent une très bonne aptitude au procédé SLM mais souffrent de propriétés mécaniques limitées.

Le Scalmalloy^{®} (DE102007018123A1) développé par APWorks offre (avec un traitement thermique post-fabrication de 4h à 325°C) de bonnes propriétés mécaniques à température ambiante. Cependant cette solution souffre d'un coût élevé sous forme de poudre lié à sa teneur élevée en scandium (^{~} 0,7% Sc) et à la nécessité d'un processus d'atomisation spécifique. Cette solution souffre également de mauvaises propriétés mécaniques à haute température, par exemple supérieure à 150°C.

L'Addalloy^{™} développé par NanoAl (WO201800935A1) est un alliage Al Mg Zr. Cet alliage souffre de propriétés mécaniques limitées avec un pic de dureté d'environ 130 HV.

On connaît également un alliage décrit dans la demande de brevet EP2924137 de RHEINFELDEN ALLOYS GMBH, qui comprend, en pourcentage massique de 1 à 6 % de nickel, de 1 à 5 % de manganèse, de 0,1 à 0,4 % de zirconium, de 0,1 à 0,4 % de vanadium, de 0,1 à 1 % de tungstène et/ ou de 0,1 à 1 % de molybdène. Cette demande de brevet concerne un alliage de moulage et ne parle pas de fabrication additive.

Les propriétés mécaniques des pièces d'aluminium obtenues par fabrication additive dépendent de l'alliage formant le métal d'apport, et plus précisément de sa composition, des paramètres du procédé de fabrication additive ainsi que des traitements thermiques appliqués. Les inventeurs ont déterminé une composition d'alliage qui, utilisée dans un procédé de fabrication additive, permet d'obtenir des pièces ayant des caractéristiques remarquables. En particulier, les pièces obtenues selon la présente invention ont des caractéristiques améliorées par rapport à l'art antérieur (notamment un alliage 8009), en particulier en termes de dureté à chaud (par exemple après 1h à 400°C).

### EXPOSE DE L'INVENTION

L'objet de l'invention est un procédé de fabrication d'une pièce comportant une formation de couches métalliques solides successives, superposées les unes aux autres, chaque couche décrivant un motif défini à partir d'un modèle numérique, chaque couche étant formée par le dépôt d'un métal, dit métal d'apport, le métal d'apport étant soumis à un apport d'énergie de façon à entrer en fusion et à constituer, en se solidifiant, ladite couche, dans lequel le métal d'apport prend la forme d'une poudre, dont l'exposition à un faisceau énergétique résulte en une fusion suivie d'une solidification de façon à former une couche solide, le procédé étant caractérisé en ce que le métal d'apport est un alliage d'aluminium comprenant les éléments d'alliage suivant:
- Ni, selon une fraction massique de 1 à 8 %, de préférence de 2 à 7 % ;
- Zr, selon une fraction massique de 0,3 à 3 %, préférentiellement de 0,5 à 2,5 % ;
- optionnellement V, selon une fraction massique de 0 à 4 %, de préférence de 0,5 à 2 % ;
- optionnellement Cu, selon une fraction massique de 0 à 7 %, de préférence de 2 à 7 % ;
- optionnellement Fe, selon une fraction massique de 0 à 3 %, de préférence de 0,5 à 3 %.

Il est à noter que l'alliage selon la présente invention peut comprendre également :
- des impuretés selon une fraction massique inférieure à 0,05 % chacune (soit 500 ppm) et inférieure à 0,15 % au total ;
- le reste étant de l'aluminium.

De préférence, l'alliage selon la présente invention comprend une fraction massique d'au moins 85 %, plus préférentiellement d'au moins 90 % d'aluminium.

La fusion de la poudre peut être partielle ou totale. De préférence, de 50 à 100 % de la poudre exposée entre en fusion, plus préférentiellement de 80 à 100 %.

Chaque couche peut notamment décrire un motif défini à partir d'un modèle numérique. Sans être lié par la théorie, les alliages selon l'invention semblent particulièrement avantageux pour présenter un bon compromis à température ambiante entre la conductivité (thermique ou électrique) et la résistance mécanique.

En particulier en présence de Zr, la conductivité (électrique ou thermique) des alliages selon l'invention à température ambiante semble augmenter d'une manière continue avec la durée de maintien à la température de recuit par exemple à 400°C. Ce qui n'est pas le cas pour la résistance mécanique à température ambiante. Ainsi, en fonction des compromis recherchés, le temps de maintien à la température de recuit semble devoir être ajusté.

La température de recuit peut être de 300 à 500°C.

La présence de Ni dans les alliages selon l'invention est particulièrement avantageuse, elle permet d'améliorer la processabilité des alliages en réduisant la sensibilité à la fissuration lors du procédé SLM.

Optionnellement, l'alliage peut également comprendre au moins un élément choisi parmi : Si, Hf, Cr, Ti, Sc, Mg, W, Nb, Ta, Y, Yb, Nd, Ce, Co, La, Mo et/ou du mischmétal, selon une fraction massique inférieure ou égale à 5 %, de préférence inférieure ou égale à 3 % chacun, et inférieure ou égale à 15 %, de préférence inférieure ou égale à 12 %, encore plus préférentiellement inférieure ou égale à 5 % au total. De manière connue de l'homme du métier, la composition du mischmétal est généralement d'environ 45 à 50 % de cérium, 25 % de lanthane, 15 à 20 % de néodyme et 5 % de praséodyme.

Ces éléments peuvent conduire à la formation de dispersoïdes ou de phases intermétalliques fines permettant d'augmenter la dureté du matériau obtenu.

Cependant, dans un mode de réalisation, on évite l'addition de Ce, mischmétal, Mg, Cr, Mo, Sc, Nb, Yb, Y, Ta, Nd, W, Co, La, Si et/ou Zn, la fraction massique préférée de chacun de ces éléments étant alors inférieure à 0,05 %, et de préférence inférieure à 0,01 %.

Dans un autre mode de réalisation, l'alliage d'aluminium comprend au moins un parmi V, Cu et Fe, dans les proportions telles que définies dans la présente description.

Optionnellement, l'alliage peut également comprendre au moins un élément choisi parmi : Sr, Ba, Sb, Bi, Ca, P, B, In et/ou Sn, selon une fraction massique inférieure ou égale à 1 %, de préférence inférieure ou égale à 0,1 %, encore plus préférentiellement inférieure ou égale à 700 ppm chacun, et inférieure ou égale à 2 %, de préférence inférieure ou égale à 1 % au total. Cependant, dans un mode de réalisation, on évite l'addition de Bi, la fraction massique préférée de Bi étant alors inférieure à 0,05 %, et de préférence inférieure à 0,01 %.

Optionnellement, l'alliage peut également comprendre au moins un élément choisi parmi : Ag selon une fraction massique de 0,06 à 1 %, Li selon une fraction massique de 0,06 à 1 %, et/ou Zn selon une fraction massique de 0,06 à 6 %. Ces éléments peuvent agir sur la résistance du matériau par précipitation durcissante ou par leur effet sur les propriétés de la solution solide.

Optionnellement, l'alliage peut également comprendre au moins un élément pour affiner les grains et éviter une microstructure colonnaire grossière, par exemple AlTiC ou AITiB2 (par exemple sous forme AT5B ou AT3B), selon une quantité inférieure ou égale à 50 kg/tonne, de préférence inférieure ou égale à 20 kg/tonne, encore plus préférentiellement inférieure ou égale à 12 kg/tonne chacun, et inférieure ou égale à 50 kg/tonne, de préférence inférieure ou égale à 20 kg/tonne au total.

Selon un mode de réalisation, le procédé peut comporter, suite à la formation des couches :
- une mise en solution suivie d'une trempe et d'un revenu, ou
- un traitement thermique typiquement à une température d'au moins 100°C et d'au plus 500°C
- et/ou une compression isostatique à chaud (CIC).

Le traitement thermique peut notamment permettre un détensionnement des contraintes résiduelles et/ou une précipitation supplémentaire de phases durcissantes.

Le traitement CIC peut notamment permettre d'améliorer les propriétés d'allongement et les propriétés en fatigue. La compression isostatique à chaud peut être réalisée avant, après ou à la place du traitement thermique.

Avantageusement, la compression isostatique à chaud est réalisée à une température de 250°C à 550°C et de préférence de 300°C à 450°C, à une pression de 500 à 3000 bars et pendant une durée de 0,5 à 10 heures.

Selon un autre mode de réalisation, adapté aux alliages à durcissement structural, on peut réaliser une mise en solution suivie d'une trempe et d'un revenu de la pièce formée et/ou une compression isostatique à chaud. La compression isostatique à chaud peut dans ce cas avantageusement se substituer à la mise en solution. Cependant le procédé selon l'invention est avantageux car il ne nécessite de préférence pas de traitement de mise en solution suivi de trempe. La mise en solution peut avoir un effet néfaste sur la résistance mécanique dans certains cas en participant à un grossissement des dispersoïdes ou des phases intermétalliques fines. Selon un mode de réalisation, le procédé selon la présente invention comporte en outre optionnellement un traitement d'usinage, et/ou un traitement de surface chimique, électrochimique ou mécanique, et/ou une tribofinition. Ces traitements peuvent être réalisés notamment pour réduire la rugosité et/ou améliorer la résistance à la corrosion et/ou améliorer la résistance à l'initiation de fissures en fatigue.

Optionnellement, il est possible de réaliser une déformation mécanique de la pièce, par exemple après la fabrication additive et/ou avant le traitement thermique.

D'autres avantages et caractéristiques ressortiront plus clairement de la description qui va suivre et des exemples non limitatifs, et représentés sur les figures listées ci-dessous.

### FIGURES

[Fig. 1] La Figure 1 est un schéma illustrant un procédé de fabrication additive de type SLM, ou EBM.
[Fig. 2] La Figure 2 montre une micrographie d'une coupe transversale d'un échantillon Al10Si0.3Mg après balayage de surface avec un laser, coupé et poli avec deux empreintes de dureté Knoop dans la couche refondue.

### DESCRIPTION DETAILLEE DE L'INVENTION

Dans la description, sauf indication contraire :
- la désignation des alliages d'aluminium est conforme à la nomenclature établie par The Aluminum Association ;
- les teneurs en éléments chimiques sont désignées en % et représentent des fractions massiques.

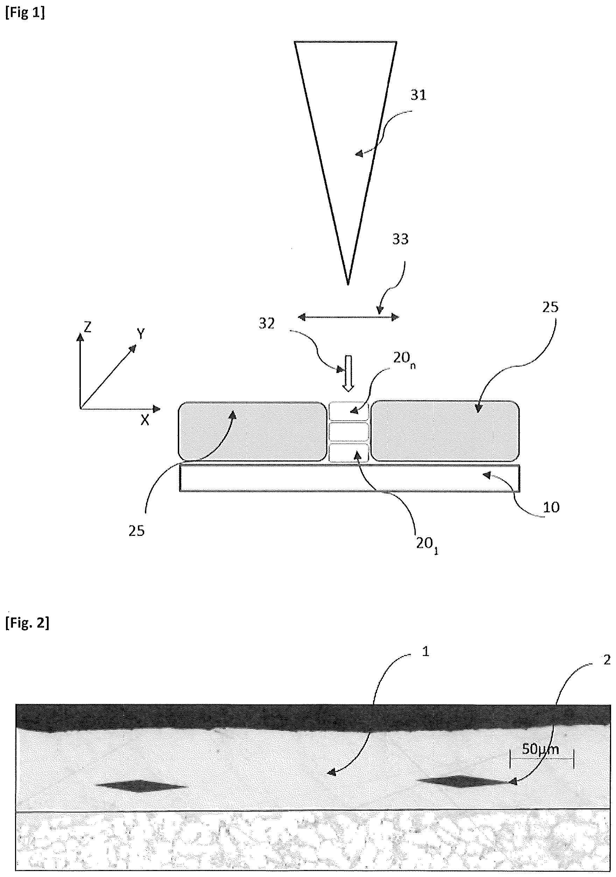

La Figure 1 décrit de façon générale un mode de réalisation, dans lequel le procédé de fabrication additive selon l'invention est mis en oeuvre. Selon ce procédé, le matériau d'apport 25 se présente sous la forme d'une poudre en alliage.

Une source d'énergie, par exemple une source laser ou une source d'électrons 31, émet un faisceau d'énergie par exemple un faisceau laser ou un faisceau d'électrons 32. La source d'énergie est couplée au matériau d'apport par un système optique ou de lentilles électromagnétiques 33, le mouvement du faisceau pouvant ainsi être déterminé en fonction d'un modèle numérique M. Le faisceau d'énergie 32 suit un mouvement selon le plan longitudinal XY, décrivant un motif dépendant du modèle numérique M. La poudre 25 est déposée sur un support 10. L'interaction du faisceau d'énergie 32 avec la poudre 25 engendre une fusion sélective de cette dernière, suivie d'une solidification, résultant en la formation d'une couche 20₁...20ₙ. Lorsqu'une couche a été formée, elle est recouverte de poudre 25 du métal d'apport et une autre couche est formée, superposée à la couche préalablement réalisée. L'épaisseur de la poudre formant une couche peut par exemple être de 10 à 200 µm. Ce mode de fabrication additive est typiquement connu sous le nom de fusion sélective par laser (sélective laser melting, SLM) quand le faisceau d'énergie est un faisceau laser, le procédé étant dans ce cas avantageusement exécuté à pression atmosphérique, et sous le nom de fusion par faisceau d'électrons (electron beam melting EBM) quand le faisceau d'énergie est un faisceau d'électrons, le procédé étant dans ce cas avantageusement exécuté à pression réduite, typiquement inférieure à 0,01 bar et de préférence inférieure à 0,1 mbar.

Dans un autre mode de réalisation, la couche est obtenue par frittage sélectif par laser (selective laser sintering, SLS ou direct métal laser sintering, DMLS), la couche de poudre d'alliage étant frittée sélectivement selon le modèle numérique choisi avec de l'énergie thermique fournie par un faisceau laser.

Dans encore un autre mode de réalisation non décrit par la figure 1, la poudre est projetée et fondue de façon simultanée par un faisceau généralement laser. Ce procédé est connu sous le nom de dépôt par fusion laser (laser melting déposition).

D'autres procédés peuvent être utilisés, notamment ceux connus sous les noms de dépôt direct d'énergie (Direct Energy Déposition, DED), dépôt direct de métal (Direct Metal Deposition, DMD), dépôt direct par laser (Direct Laser Déposition, DLD), technologie de dépôt par laser (Laser Déposition Technology, LDT), dépôt de métal par laser (Laser Metal Deposition, LMD), ingénierie de formes nettes par laser (Laser Engineering Net Shaping, LENS), technologie de plaquage par laser (Laser Cladding Technology, LCT), ou technologie de fabrication de formes libres par laser (Laser Freeform Manufacturing Technology, LFMT).

Dans un mode de réalisation, le procédé selon l'invention est utilisé pour la réalisation d'une pièce hybride comprenant une partie obtenue par des procédés classiques de laminage et/ou de filage et/ou de moulage et/ou de forgeage optionnellement suivi d'usinage et une partie solidaire obtenue par fabrication additive. Ce mode de réalisation peut également convenir pour la réparation de pièces obtenues par les procédés classiques.

On peut également, dans un mode de réalisation de l'invention, utiliser le procédé selon l'invention pour la réparation de pièces obtenues par fabrication additive.

A l'issue de la formation des couches successives on obtient une pièce brute ou pièce à l'état brut de fabrication.

Les pièces métalliques obtenues par le procédé selon l'invention sont particulièrement avantageuses car elles ont une dureté à l'état brut de fabrication inférieure à celle d'une référence en 8009, et en même temps une dureté après un traitement thermique, en particulier après un traitement thermique d'une heure à 400°C, supérieure à celle d'une référence en 8009. La dureté plus faible à l'état brut de fabrication des alliages selon la présente invention par rapport à un alliage 8009 est considérée comme avantageuse pour l'aptitude au procédé SLM, en induisant un niveau de contraintes plus faible lors de la fabrication SLM et ainsi une plus faible sensibilité à la fissuration à chaud. La dureté plus élevée après un traitement thermique (par exemple 1h à 400°C) des alliages selon la présente invention par rapport à un alliage 8009 apporte une meilleure stabilité thermique. Le traitement thermique pourrait être une étape de compression isostatique à chaud (CIC) post-fabrication SLM. Ainsi, les alliages selon la présente invention sont plus mous à l'état brut de fabrication mais ont une meilleure dureté après traitement thermique, d'où de meilleures propriétés mécaniques pour les pièces en service.

La dureté Knoop HK0,05 à l'état brut de fabrication des pièces métalliques obtenues selon la présente invention est de préférence de 150 à 300 HK. De manière préférée, la dureté Knoop HK0,05 des pièces métalliques obtenues selon la présente invention, après un traitement thermique d'au moins 100°C et d'au plus 500°C et/ou une compression isostatique à chaud, par exemple après 1h à 400°C, est de 150 à 250 HK. Le protocole de mesure de la dureté Knoop est décrit dans les exemples ci-après.

La poudre peut présenter au moins l'une des caractéristiques suivantes :
- taille moyenne de particules de 5 à 100 µm, de préférence de 5 à 25 µm, ou de 20 à 60 µm. Les valeurs données signifient qu'au moins 80 % des particules ont une taille moyenne dans la gamme spécifiée ;
- forme sphérique. La sphéricité d'une poudre peut par exemple être déterminée en utilisant un morphogranulomètre ;
- bonne coulabilité. La coulabilité d'une poudre peut par exemple être déterminée selon la norme ASTM B213 ou la norme ISO 4490 :2018. Selon la norme ISO 4490 :2018, le temps d'écoulement est de préférence inférieur à 50 s ;
- faible porosité, de préférence de 0 à 5 %, plus préférentiellement de 0 à 2 %, encore plus préférentiellement de 0 à 1 % en volume. La porosité peut notamment être déterminée par microscopie à balayage électronique ou par pycnométrie à l'hélium (voir la norme ASTM B923) ;
- absence ou faible quantité (moins de 10 %, de préférence moins de 5 % en volume) de petites particules (1 à 20 % de la taille moyenne de la poudre), dites satellites, qui collent aux particules plus grosses.

La poudre peut être obtenue par des procédés classiques d'atomisation à partir d'un alliage selon l'invention sous forme liquide ou solide ou, alternativement, la poudre peut être obtenue par mélange de poudres primaires avant l'exposition au faisceau énergétique, les différentes compositions des poudres primaires ayant une composition moyenne correspondant à la composition de l'alliage selon l'invention.

On peut également ajouter des particules infusibles, non solubles, par exemple des oxydes ou des particules TiB₂ ou des particules de carbone, dans le bain avant l'atomisation de la poudre et/ou lors du dépôt de la poudre et/ou lors du mélange des poudres primaires. Ces particules peuvent servir à affiner la microstructure. Elles peuvent également servir à durcir l'alliage si elles sont de taille nanométrique. Ces particules peuvent être présentes selon une fraction volumique inférieure à 30 %, de préférence inférieure à 20 %, plus préférentiellement inférieure à 10 %.

La poudre peut être obtenue par exemple par atomisation par jet de gaz, atomisation plasma, atomisation par jet d'eau, atomisation par ultrasons, atomisation par centrifugation, électrolyse et sphéroïdisation, ou broyage et sphéroïdisation.

De préférence, la poudre est obtenue par atomisation par jet de gaz Le procédé d'atomisation par jet de gaz commence avec la coulée d'un métal fondu à travers une buse. Le métal fondu est ensuite atteint par des jets de gaz neutres, tels que de l'azote ou de l'argon, et atomisé en très petites gouttelettes qui se refroidissent et se solidifient en tombant à l'intérieur d'une tour d'atomisation. Les poudres sont ensuite recueillies dans une canette. Le procédé d'atomisation par jet de gaz présente l'avantage de produire une poudre ayant une forme sphérique, contrairement à l'atomisation par jet d'eau qui produit une poudre ayant une forme irrégulière. Un autre avantage de l'atomisation par jet de gaz est une bonne densité de poudre, notamment grâce à la forme sphérique et à la distribution de taille de particules. Encore un autre avantage de ce procédé est une bonne reproductibilité de la distribution de taille de particules.

Après sa fabrication, la poudre peut être étuvée, notamment afin de réduire son humidité. La poudre peut également être conditionnée et stockée entre sa fabrication et son utilisation.

La poudre peut notamment être utilisée dans les applications suivantes :
- frittage sélectif par laser (Selective Laser Sintering ou SLS en anglais) ;
- frittage direct du métal par laser (Direct Metal Laser Sintering ou DMLS en anglais) ;
- frittage sélectif par chauffage (Selective Heat Sintering ou SHS en anglais) ;
- fusion sélective par laser (Selective Laser Melting ou SLM en anglais) ;
- fusion par faisceau d'électrons (Electron Beam Melting ou EBM en anglais) ;
- dépôt par fusion laser (Laser Melting Deposition en anglais) ;
- dépôt direct par apport d'énergie (Direct Energy Déposition ou DED en anglais) ;
- dépôt direct de métal (Direct Metal Déposition ou DMD en anglais) ;
- dépôt direct par laser (Direct Laser Deposition ou DLD en anglais) ;
- technologie de dépôt par Laser (Laser Déposition Technology ou LDT en anglais) ;
- ingénierie de formes nettes par laser (Laser Engineering Net Shaping ou LENS en anglais) ;
- technologie de plaquage par laser (Laser Cladding Technology ou LCT en anglais) ;
- technologie de fabrication de formes libres par laser (Laser Freeform Manufacturing Technology ou LFMT en anglais) ;
- dépôt par fusion laser (Laser Metal Deposition ou LMD en anglais) ;
- pulvérisation à froid (Cold Spray Consolidation ou CSC en anglais) ;
- fabrication additive par friction (Additive Friction Stir ou AFS en anglais) ;
- frittage par étincelle au plasma ou frittage flash (Field Assisted Sintering Technology, FAST ou spark plasma sintering en anglais) ; ou
- soudage par friction rotative (Inertia Rotary Friction Welding ou IRFW.

L'invention sera décrite plus en détails dans l'exemple ci-après.

L'invention n'est pas limitée aux modes de réalisation décrits dans la description ci-avant ou dans les exemples ci-après, et peut varier largement dans le cadre de l'invention telle que définie par les revendications jointes à la présente description.

### EXEMPLES

Deux alliages selon la présente invention, appelés Innov1 et Innov2, et un alliage 8009 de l'art antérieur ont été coulés dans un moule en cuivre en utilisant une machine Induthem VC 650V pour obtenir des lingots de 130 mm de hauteur, de 95 mm de largeur et de 5 mm d'épaisseur. La composition des alliages est donnée en pourcentage de fraction massique dans le tableau 1 suivant.

**[Tableau 1]**

| **Alliages** | **Si** | **Fe** | **V** | **Ni** | **Zr** | **Cu** |
|---|---|---|---|---|---|---|
| Référence (8009) | 1,8 | 8,65 | 1,3 | - | - | - |
| Innov1 | - | - | 1 | 6 | 1,5 | - |
| Innov2 | - | - | 1 | 6 | 2 | 5 |

Les alliages tels que décrits dans le tableau 1 ci-avant ont été testés par une méthode de prototypage rapide. Des échantillons ont été usinés pour le balayage de la surface avec un laser, sous forme de plaquettes de dimensions 60 x 22 x 3 mm, à partir des lingots obtenus ci-avant. Les plaquettes ont été placées dans une machine SLM et des balayages de la surface ont été effectués avec un laser en suivant la même stratégie de balayage et des conditions de procédé représentatives de celles utilisées pour le procédé SLM. Il a en effet été constaté qu'il était possible de cette manière d'évaluer l'aptitude des alliages au procédé SLM et notamment la qualité de surface, la sensibilité à la fissuration à chaud, la dureté à l'état brut et la dureté après traitement thermique.

Sous le faisceau laser, le métal fond dans un bain de 10 à 350 µm d'épaisseur. Après le passage du laser, le métal refroidit rapidement comme dans le procédé SLM. Après le balayage laser, une fine couche en surface de 10 à 350 µm d'épaisseur a été fondue puis solidifiée. Les propriétés du métal dans cette couche sont proches des propriétés du métal au coeur d'une pièce fabriquée par SLM, car les paramètres de balayage sont judicieusement choisis. Le balayage laser de la surface des différents échantillons a été effectué à l'aide d'une machine de fusion laser sélective ProX300 de marque 3DSystems. La source laser avait une puissance de 250 W, l'écart vecteur était de 60 µm, la vitesse de balayage était de 300 mm/s et le diamètre du faisceau était de 80 µm.

### Mesure de dureté Knoop

La dureté est une propriété importante pour les alliages. En effet, si la dureté dans la couche refondue par balayage de la surface avec un laser est élevée, une pièce fabriquée avec le même alliage aura potentiellement une limite de rupture élevée.

Pour évaluer la dureté de la couche refondue, les plaquettes obtenues ci-avant ont été coupées dans le plan perpendiculaire à la direction des passes du laser et ont ensuite été polis. Après polissage, des mesures de dureté ont été effectuées dans la couche refondue. La mesure de dureté a été effectuée avec un appareil de modèle Durascan de Struers. La méthode de dureté Knoop 50 g avec la grande diagonale de l'empreinte placée parallèlement au plan de la couche refondue a été choisie pour garder suffisamment de distance entre l'empreinte et le bord de l'échantillon. 15 empreintes ont été positionnées à mi-épaisseur de la couche refondue. La Figure 2 montre un exemple de la mesure de dureté. La référence 1 correspond à la couche refondue et la référence 2 correspond à une empreinte de dureté Knoop.

La dureté a été mesurée selon l'échelle Knoop avec une charge de 50 g après traitement laser (à l'état brut) et après un traitement thermique supplémentaire à 400°C pendant des durées variables, permettant notamment d'évaluer l'effet d'un traitement thermique ou d'un éventuel traitement CIC post fabrication sur les propriétés mécaniques.

Les valeurs de dureté Knoop HK0,05 à l'état brut et après différentes durées à 400°C sont données dans le tableau 2 ci-après (HK0,05).

**[Tableau 2]**

| **Alliage** | **Etat brut** | **Après 1h à 400°C** | **Après 4h à 400°C** | **Après 10h à 400°C** |
|---|---|---|---|---|
| Référence (8009) | 316 | 145 | 159 | 155 |
| Innov1 | 261 | 220 | 187 | 164 |
| Innov2 | 289 | 234 | 203 | 192 |

Les alliages selon la présente invention (Innov1 et Innov2) ont montré une dureté Knoop HK0,05 à l'état brut inférieure à celle de l'alliage 8009 de référence, mais, après un traitement thermique à 400°C, supérieure à celle de l'alliage 8009 de référence.

Le tableau 2 ci-avant montre bien la meilleure stabilité thermique des alliages selon la présente invention par rapport à l'alliage 8009 de référence. En effet, la dureté de l'alliage 8009 a chuté fortement dès le début du traitement thermique, puis a atteint un plateau. Au contraire, la dureté des alliages selon la présente invention a diminué progressivement.

## Revendications

1. Procédé de fabrication d'une pièce comportant une formation de couches métalliques solides successives (20₁...20ₙ), superposées les unes aux autres, chaque couche décrivant un motif défini à partir d'un modèle numérique (M), chaque couche étant formée par le dépôt d'un métal (25), dit métal d'apport, le métal d'apport étant soumis à un apport d'énergie de façon à entrer en fusion et à constituer, en se solidifiant, ladite couche, dans lequel le métal d'apport prend la forme d'une poudre (25), dont l'exposition à un faisceau énergétique (32) résulte en une fusion suivie d'une solidification de façon à former une couche solide (20₁...20ₙ),
le procédé étant **caractérisé en ce que** le métal d'apport (25) est un alliage d'aluminium comprenant les éléments d'alliage suivant :
- Ni, selon une fraction massique de 1 à 8 %, de préférence de 2 à 7 % ;
- Zr, selon une fraction massique de 0,3 à 3 %, préférentiellement de 0,5 à 2,5 % ;
- optionnellement V, selon une fraction massique de 0 à 4 %, de préférence de 0,5 à 2 % ;
- optionnellement Cu, selon une fraction massique de 0 à 7 %, de préférence de 2 à 7 % ;
- optionnellement Fe, selon une fraction massique de 0 à 3 %, de préférence de 0,5 à 3 %
- optionnellement au moins un élément choisi parmi : Si, Hf, Cr, Ti, Sc, Mg, W, Nb, Ta, Y, Yb, Nd, Ce, Co, La, Mo et/ou du mischmétal, selon une fraction massique inférieure ou égale à 5 % chacun, et inférieure ou égale à 15 %au total ;
- optionnellement au moins un élément choisi parmi : Sr, Ba, Sb, Bi, Ca, P, B, In et/ou Sn, selon une fraction massique inférieure ou égale à 1 % chacun, et inférieure ou égale à 2 % au total ;
- optionnellement au moins un élément choisi parmi : Ag selon une fraction massique de 0,06 à 1 %, Li selon une fraction massique de 0,06 à 1 %, et/ou Zn selon une fraction massique de 0,06 à 6 % ;
- optionnellement des impuretés selon une fraction massique inférieure à 0,05 % chacune et inférieure à 0,15 % au total ;
- le reste étant de l'aluminium.

2. Procédé selon la revendication 1, dans lequel la fraction massique dudit au moins un élément choisi parmi : Si, Hf, Cr, Ti, Sc, Mg, W, Nb, Ta, Y, Yb, Nd, Ce, Co, La, Mo et/ou du mischmétal, est inférieure ou égale à 3 % chacun, et de préférence inférieure ou égale à 12 %, encore plus préférentiellement inférieure ou égale à 5 % au total.

3. Procédé selon l'une quelconque des revendications précédentes, dans lequel on évite l'addition de Ce, mischmétal, Mg, Cr, Mo, Sc, Nb, Yb, Y, Ta, Nd, W, Co, La, Si et/ou Zn, la fraction massique préférée de chacun de ces éléments étant alors inférieure à 0,05 %, et de préférence inférieure à 0,01 %.

4. Procédé selon l'une quelconque des revendications précédentes, dans lequel la fraction massique dudit au moins un élément choisi parmi : Sr, Ba, Sb, Bi, Ca, P, B, In et/ou Sn, est inférieure ou égale à 0,1 %, préférentiellement inférieure ou égale à 700 ppm chacun, et de préférence inférieure ou égale à 1 % au total.

5. Procédé selon l'une quelconque des revendications précédentes, dans lequel l'alliage d'aluminium comprend également au moins un élément pour affiner les grains, par exemple AlTiC ou AITiB2, selon une quantité inférieure ou égale à 50 kg/tonne, de préférence inférieure ou égale à 20 kg/tonne, encore plus préférentiellement inférieure ou égale à 12 kg/tonne chacun, et inférieure ou égale à 50 kg/tonne, de préférence inférieure ou égale à 20 kg/tonne au total.

6. Procédé selon l'une quelconque des revendications précédentes, comportant, suite à la formation des couches (20₁...20ₙ),
- une mise en solution suivie d'une trempe et d'un revenu, ou
- un traitement thermique typiquement à une température d'au moins 100°C et d'au plus 500°C,
- et/ou une compression isostatique à chaud.

## Patentansprüche

1. Verfahren zur Herstellung eines Teils, das eine Bildung aufeinanderfolgender fester metallischer Schichten (20₁...20ₙ) beinhaltet, die sich überlagern, wobei jede Schicht ein Muster beschreibt, das ausgehend von einem numerischen Modell (M) definiert ist, wobei jede Schicht durch Ablagerung eines Metalls (25), Zusatzmetall genannt, gebildet wird, wobei das Zusatzmetall einer Energiezufuhr unterzogen wird, so dass es zu schmelzen beginnt und durch Verfestigen die Schicht bildet, wobei das Zusatzmetall die Form eines Pulvers (25) annimmt, dessen Aussetzen an einen Energiestrahl (32) zu einer Verschmelzung und anschließender Verfestigung führt, so dass es eine feste Schicht (20₁...20ₙ) bildet,
wobei das Verfahren **dadurch gekennzeichnet ist, dass** das Zusatzmetall (25) eine Aluminiumlegierung ist, die die folgenden Legierungselemente umfasst:
- Ni, mit einem Massenanteil von 1 bis 8 %, vorzugsweise 2 bis 7 %;
- Zr, mit einem Massenanteil von 0,3 bis 3 %, bevorzugterweise 0,5 bis 2,5 %;
- optional V, mit einem Massenanteil von 0 bis 4 %, vorzugsweise 0,5 bis 2 %;
- optional Cu, mit einem Massenanteil von 0 bis 7 %, vorzugsweise 2 bis 7 %;
- optional Fe, mit einem Massenanteil von 0 bis 3 %, vorzugsweise 0,5 bis 3 %;
- optional mindestens ein Element ausgewählt aus: Si, Hf, Cr, Ti, Sc, Mg, W, Nb, Ta, Y, Yb, Nd, Ce, Co, La, Mo und/oder Mischmetall, mit einem Massenanteil von jeweils 5 % oder weniger und 15 % oder weniger insgesamt;
- optional mindestens ein Element ausgewählt aus: Sr, Ba, Sb, Bi, Ca, P, B, In und/oder Sn, mit einem Massenanteil von jeweils 1 % oder weniger und 2 % oder weniger insgesamt;
- optional mindestens ein Element ausgewählt aus: Ag, mit einem Massenanteil von 0,06 bis 1 %, Li, mit einem Massenanteil von 0,06 bis 1 % und/oder Zn, mit einem Massenanteil von 0,06 bis 6 %;
- optional Verunreinigungen mit einem Massenanteil von jeweils weniger als 0,05 % und weniger als 0,15 % insgesamt;
- der Rest ist Aluminium.

2. Verfahren nach Anspruch 1, wobei der Massenanteil des mindestens einen Elements ausgewählt aus: Si, Hf, Cr, Ti, Sc, Mg, W, Nb, Ta, Y, Yb, Nd, Ce, Co, La, Mo und/oder Mischmetall, jeweils kleiner oder gleich 3 % ist, und vorzugsweise kleiner oder gleich 12 %, und noch bevorzugter kleiner oder gleich 5 % insgesamt.

3. Verfahren nach einem der vorhergehenden Ansprüche, wobei die Zugabe von Ce, Mischmetall, Mg, Cr, Mo, Sc, Nb, Yb, Y, Ta, Nd, W, Co, La, Si und/oder Zn vermieden wird, wobei der bevorzugte Massenanteil jedes dieser Elemente dann weniger als 0,05 % ist, und vorzugsweise weniger als 0,01 %.

4. Verfahren nach einem der vorhergehenden Ansprüche, wobei der Massenanteil des mindestens einen Elements ausgewählt aus: Sr, Ba, Sb, Bi, Ca, P, B, In und/oder Sn, kleiner oder gleich 0,1 % ist, bevorzugterweise jeweils kleiner oder gleich 700 ppm, und vorzugsweise kleiner oder gleich 1 % insgesamt.

5. Verfahren nach einem der vorhergehenden Ansprüche, wobei die Aluminiumlegierung auch mindestens ein Element zur Veredelung des Korns umfasst, zum Beispiel AlTiC oder AlTiB2, mit einer Menge von weniger oder gleich 50 kg/Tonne, vorzugsweise weniger oder gleich 20 kg/Tonne, noch bevorzugter jeweils weniger oder gleich 12 kg/Tonne und weniger oder gleich 50 kg/Tonne, vorzugsweise weniger oder gleich 20 kg/Tonne insgesamt.

6. Verfahren nach einem der vorhergehenden Ansprüche, nach der Bildung der Schichten (20₁ ...20ₙ) beinhaltend:
- ein Aufbereiten in Lösung, gefolgt von Abschrecken und Anlassen, oder
- eine Wärmebehandlung typischerweise bei einer Temperatur von mindestens 100 °C und höchstens 500 °C,
- und/oder ein heißisostatisches Pressen.

## Claims

1. A method for manufacturing a part including a formation of successive solid metallic layers (20₁...20ₙ), superimposed on one another, each layer describing a pattern defined from a digital model (M), each layer being formed by the deposition of a metal (25), called filler metal, the filler metal being subjected to an energy input so as to melt and constitute, when solidifying, said layer, wherein the filler metal is in the form of a powder (25), whose exposure to an energy beam (32) results in melting followed by solidification so as to form a solid layer (20₁...20ₙ), the method being **characterized in that** the filler metal (25) is an aluminum alloy comprising the following alloy elements:
- Ni, according to a weight fraction from 1 to 8 %, preferably from 2 to 7 %;
- Zr, according to a weight fraction from 0.3 à 3 %, preferably from 0.5 to 2.5 %;
- optionally V, according to a weight fraction from 0 à 4 %, preferably from 0.5 to 2 %;
- optionally Cu, according to a weight fraction from 0 à 7 %, preferably from 2 to 7 %;
- optionally Fe, according to a weight fraction from 0 à 3 %, preferably from 0.5 to 3 %;
- optionally, at least one element selected from: Si, Hf, Cr, Ti, Sc, Mg, W, Nb, Ta, Y, Yb, Nd, Ce, Co, La, Mo and/or a mischmetal, according to a weight fraction lower than or equal to 5 % for each one, and lower than or equal to 15 % all in all;
- optionally, at least one element selected from: Sr, Ba, Sb, Bi, Ca, P, B, In and/or Sn, according to a weight fraction lower than or equal to 1 % for each one, and lower than or equal to 2 % all in all;
- optionally, at least one element selected from: Ag according to a weight fraction from 0.06 to 1 %, Li according to a weight fraction from 0.06 to 1 %, and/or Zn according to a weight fraction from 0.06 to 6 %;
- optionaly impurities according to a weight fraction lower than 0.05 % for each one and lower than 0.15 % all in all;
- the remainder consisting of aluminum.

2. The method according to claim 1, wherein the weight fraction of said at least one element selected from: Si, Hf, Cr, Ti, Sc, Mg, W, Nb, Ta, Y, Yb, Nd, Ce, Co, La, Mo and/or a mischmetal, is lower than or equal to 3 % for each one, and preferably lower than or equal to 12 %, still more preferably lower than or equal to 5 % all in all.

3. The method according to any one of the preceding claims, wherein the addition of Ce, a mischmetal, Mg, Cr, Mo, Sc, Nb, Yb, Y, Ta, Nd, W, Co, La, Si and/or Zn is avoided, the preferred weight fraction of each of these elements then being lower than 0.05 %, and preferably lower than 0.01 %.

4. The method according to any one of the preceding claims, wherein the weight fraction of said at least one element selected from: Sr, Ba, Sb, Bi, Ca, P, B, In and/or Sn, is lower than or equal to 0.1 %, preferably lower than or equal to 700 ppm for each one, and preferably lower than or equal to 1 % all in all.

5. The method according to any one of the preceding claims, wherein the aluminum alloy also comprises at least one element for refining the grains, for example AlTiC or AlTiB2, according to an amount lower than or equal to 50 kg/ton, preferably lower than or equal to 20 kg/ton, still more preferably lower than or equal to 12 kg/ton for each one, and lower than or equal to 50 kg/ton, preferably lower than or equal to 20 kg/ton all in all.

6. The method according to any one of the preceding claims, including, following the formation of the layers (20₁...20ₙ),
- a solution heat treatment followed by quenching and tempering, or
- a heat treatment typically at a temperature of at least 100°C and at most 500°C,
- and/or a hot isostatic pressing.
